# EUROPEAN PATENT APPLICATION

(11) **EP 4 744 988 A1**
(43) Date of publication of application: **20.05.2026**
(21) Application number: 24212800.7
(22) Date of filing: 13.11.2024
(51) Int. Cl.: B60W 10/20, B60W 30/10, B60W 40/06, B60W 60/00, G06V 20/56, B60W 50/00

(54) **COMPUTER SYSTEM, VEHICLE, METHOD, COMPUTER PROGRAM PRODUCT AND COMPUTER-READABLE STORAGE MEDIUM FOR ENERGY-EFFICIENT TIRE MANAGEMENT OF A VEHICLE**

(71) Applicant: Volvo Truck Corporation, 405 08 Göteborg (SE)
(72) Inventor: Östman, Bill, 436 57 Hovås (SE); Cider, Lennart, 441 95 Alingsås (SE)
(74) Representative: Valea AB

(57) **Abstract**

A computer system (700) comprising processing circuitry (702) configured to assist in steering a vehicle (1) travelling on a drivable surface (100) is provided. The processing circuitry (702) is configured to obtain a measured drivable surface condition of the drivable surface (100) indicative of a wetness condition and/or a temperature condition of the drivable surface (100). The processing circuitry (702) is configured to, based on the drivable surface condition, determine a travel plan of how one or more wheels (w) of the vehicle (1) shall travel over the drivable surface (100) to fulfil an energy efficiency condition. The processing circuitry (702) is configured to issue a steering instruction to a steering arrangement (50) of the vehicle (1). The steering instruction indicates to apply a turning force to the steering arrangement of the vehicle (1) based on the determined travel plan.

## Description

### TECHNICAL FIELD

The disclosure relates generally to vehicle management. In particular aspects, the disclosure relates to energy-efficient tire management of a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Cold tires are sources of increased energy or fuel consumption for vehicles. This is since cold tires means an increase in rolling resistance and thereby an increase of energy consumption for vehicles when compared to warm tires.

While tires are warmed by a vehicle travelling for some time, the tires tend to be cooled down when travelling in cool locations, and in particular in wet locations which will cool down tires of the vehicle.

As roads and surfaces tend to have worn down locations where tracks are formed, this means that vehicles tend to travel in the same locations of roads and surfaces, and do not consider rolling resistance or temperature of the tires.

This means that vehicles are travelling with relatively cool tires causing suboptimal rolling resistance and an increase in energy consumption.

Hence, there is a need to improve efficiency of vehicle operations.

### SUMMARY

According to a first aspect of the disclosure, a computer system comprising processing circuitry configured to assist in steering a vehicle travelling on a drivable surface.

The processing circuitry is configured to obtain, as measured by one or more sensors of the vehicle, a drivable surface condition of the drivable surface.

The drivable surface condition is indicative of a wetness condition and/or a temperature condition of the drivable surface.

The processing circuitry is configured to, based on the drivable surface condition, determine a travel plan of how one or more wheels of the vehicle shall travel over the drivable surface to fulfil an energy efficiency condition.

The processing circuitry is configured to issue a steering instruction to a steering arrangement of the vehicle.

The steering instruction indicates to apply a turning force to the steering arrangement of the vehicle based on the determined travel plan.

The first aspect of the disclosure may seek to improve efficiency of vehicle operations.

A technical benefit may include a reduced rolling resistance of the tires of the wheels of the vehicle and consequently improved energy efficiency of the vehicle. This is since the travel plan and associated steering instruction will at least partly guide or steer the vehicle towards to travel in the drivable surface to fulfil the energy efficiency condition, in particular based on temperature or wetness conditions as part of the drivable surface conditions. This means that instead of travelling where the vehicle and all other vehicles are normally travelling on the drivable surface, the drivable surface conditions such as temperature and wetness can be considered to in an energy efficient manner determine the travel plan and then to issue the steering instruction accordingly.

The steering instruction as part of examples herein may apply to both or any of manually controlled vehicles and autonomously driven vehicles, e.g., where a force less than a threshold may be applied to the steering arrangement such as by having a torque force on a steering wheel or to apply steering directly on wheels of a steered axle of the vehicle.

When the vehicle is manually controlled the steering instruction may be applied similarly as to lane keeping technology where the vehicle or steering of the vehicle is nudged into steering to an energy efficient of the driving surface according to the travel plan.

When the vehicle is autonomously controlled, the steering instruction may be to steer the vehicle completely or to adjust a current steering of the vehicle such that the vehicle is steered towards to an energy efficient of the driving surface according to the travel plan.

Optionally in some examples, including in at least one preferred example, the energy efficiency condition comprises at least one of:
- reducing a rolling resistance of the one or more wheels,
- reducing energy consumption of the vehicle,
- increasing temperature of one or more tires of the one or more wheels,
- maintaining a rolling resistance of the one or more wheels,
- maintaining an energy consumption of the vehicle,
- maintaining temperature of one or more tires of the one or more wheels,
- mitigating or limiting an increase of a rolling resistance of the one or more wheels,
- mitigating or limiting an increase in energy consumption of the vehicle, or
- mitigating or limiting a reduction of temperature of one or more tires of the one or more wheels.

A technical benefit may include improved efficiency of vehicle operations. This is since the travel plan can be determined to fulfill any suitable energy efficiency condition. While examples herein may primarily relate to reducing rolling resistance and consequently the energy consumption of the vehicle, typically by increasing the temperature of the one or more tires, examples herein may more generally relate to any suitable energy efficient benefit that may be achieved by determining the travel plan based on the drivable surface conditions, and also, if an increase in efficiency is not possible, e.g., since all of the driving surface ahead of the vehicle is cold and/or wet, at least the travel plan can be determined to maintain or to mitigate any reductions in energy efficiency.

Optionally in some examples, including in at least one preferred example, the processing circuitry is configured to determine the travel plan to fulfill the energy efficiency condition by accounting for characteristics of the vehicle.

A technical benefit may include improved efficiency of vehicle operations. This is the characteristics of the vehicle, e.g., size, load per axle, if it comprises a trailer etc. may affect how the vehicle shall travel to best improve energy efficiency. For example, the travel plan may be determined with respect to primarily guiding wheels of a trailer of the vehicle and/or wheels of an axle which is subject to the highest load.

Optionally in some examples, including in at least one preferred example, the processing circuitry is further configured to obtain, as measured by the one or more sensors of the vehicle, an indication of one or more tracks of the drivable surface. In some of these examples the processing circuitry is configured to determine the travel plan by determining whether or not the one or more wheels the vehicle shall travel in the one or more tracks.

A technical benefit may include improved efficiency of vehicle operations. This is travelling in the one or more tracks may in some circumstances, e.g., when the one or more tracks are filled with water, snow, or ice, reduce energy efficiency due to cooling down the tires of the vehicle, however, in some other circumstance such as when there are light rain, travelling in the one or more tracks may increase the energy efficiency. This is since the developments of examples herein have been made with the realization that the largest factor for rolling resistance of a tire is that the vehicle is cooling down, and that such cool down is caused by the tire being wet. The one or more tracks are formed since many vehicles travel in these tracks and hence, when there are only light rain as indicated by the wetness condition, the one or more tracks may be warm enough and have enough traffic such that they are drier than other locations of the driving surface which also means that the one or more tracks are more energy efficient for the vehicle to travel when the wetness is sufficiently low, e.g., when the wetness condition indicates that rain falls at a rate lower than a predefined threshold. Additionally or alternatively, the wetness condition may comprise sensor data indicating wet locations of the driving surface, and if the one or more tracks are indicated to be drier than the remaining parts of the driving surface, then the travel plan may be determined such that the vehicle shall travel in the one or more tracks.

Additionally or alternatively, for the same or similar reasons as discussed above, the one or more tracks may also be beneficial for the vehicle to travel if they are indicated or assessed with respect to the temperature condition to be warmer than other parts of the driving surface.

Optionally in some examples, including in at least one preferred example, the vehicle is a vehicle combination comprising at least one towed unit, and wherein the processing circuitry is configured to determine the travel plan by determining whether or not one or more wheels of the at least one towed unit shall travel in the one or more tracks of the drivable surface.

A technical benefit may include improved efficiency of vehicle operations. This is since the rolling resistance of the wheels of the towed unit may affect the energy consumption of the vehicle the most, and hence, improving the rolling resistance for the towed unit by determining whether or not may be the most important aspect to the energy efficiency condition. Hence, it may need to be part of the travel plan to determine whether or not wheels of the towed unit shall travel in the one or more tracks or not. As discussed above, when the one or more tracks are measured to be drier or warmer, or otherwise possible to determine that they are likely drier due to light rain etc., then the travel plan may be determined such that the towed unit is steered by the steering instruction to travel in the one or more tracks for improved rolling resistance.

Optionally in some examples, including in at least one preferred example, the wetness condition indicates that the drivable surface is wet, the processing circuitry is further configured to:
- based on the wetness condition, assess whether or not the one or more tracks are wetter or drier than the remaining drivable parts of the drivable surface, and
- determine the travel plan by determining that the one or more wheels of the vehicle shall travel in the one or more tracks when the one or more tracks are assessed to be drier than the remaining parts of the drivable surface.

A technical benefit may include improved efficiency of vehicle operations. This is since travelling on the drier parts of the drivable surface improves energy efficiency by ensuring that the rolling resistance is low.

Optionally in some examples, including in at least one preferred example, the temperature condition comprises a heat distribution of the drivable surface. In some of these examples, the processing circuitry is configured to determine the travel plan by determining that the one or more wheels of the vehicle shall, according to the heat distribution, travel in one or more first locations associated with a temperature warmer than a temperature of one or more second locations of the drivable surface.

A technical benefit may include improved efficiency of vehicle operations. This is since travelling in the one or more warm first locations of the driving surface may increase temperature of the tires of the vehicle and thereby reduce rolling resistance and improve energy efficiency.

Optionally in some examples, including in at least one preferred example, the one or more first locations are associated with the warmest temperature of the drivable surface according to the heat distribution.

A technical benefit may include improved efficiency of vehicle operations. This is since temperature of the tires of the vehicle will increase and thereby rolling resistance is reduced and energy efficiency improved.

Optionally in some examples, including in at least one preferred example, the wetness condition comprises a difference in wetness over one or more locations of the drivable surface. In some of these examples, the processing circuitry is configured to determine the travel plan by determining that the one or more wheels of the vehicle shall, according to the difference in wetness of the drivable surface, travel in one or more third locations associated with a drier surface area than a surface of one or more fourth locations of the drivable surface.

A technical benefit may include improved efficiency of vehicle operations. This is since travelling in the one or more dry third locations of the driving surface may ensure that the tires of the vehicle are not cooled down, thereby ensuring that the rolling resistance of the wheels of the vehicle is low, which improves energy efficiency of the vehicle.

Optionally in some examples, including in at least one preferred example, the one or more third locations are associated with the driest surface area of the drivable surface.

A technical benefit may include improved efficiency of vehicle operations. This is since the rolling resistance is low due to the tires of the vehicle not being cooled down by any wetness in the driving surface.

Optionally in some examples, including in at least one preferred example, when the vehicle is configured to actively avoid travelling in the one or more tracks, and/or to travel on edges of the one or more tracks, the processing circuitry is configured to determine the travel plan by, when the drivable surface condition indicates that traveling in the one or more tracks improves energy-efficiency of operating the vehicle, override and/or cancel the active instruction to avoid travelling in the one or more tracks and/or to travel on the edges of the one or more tracks.

A technical benefit may include improved efficiency of vehicle operations. This is since while there are at times benefits to travelling outside the one or more tracks and/or on the edges of the one or more tracks, there are certain situations where such behavior may not be ideal, e.g., when the one or more tracks are drier and/or warmer than remaining parts of the driving surface. Hence, the vehicle can be controlled to avoid the one or more tracks when possible, which may additionally serve the purpose of reducing road wear and to avoid any water gathered in said one or more tracks, but when the circumstances are that the one or more tracks are beneficial to travel into for energy-efficiency purposes, the vehicle can be steered into driving in the one or more tracks.

According to a second aspect of the disclosure, a vehicle is provided. The vehicle comprises and/or is controlled by a computer system according to the first aspect.

Optionally in some examples, including in at least one preferred example, the vehicle is a vehicle combination comprising at least one towed unit.

According to third aspect of the disclosure, a computer-implemented method for assisting in steering a vehicle travelling on a drivable surface is provided.

The method comprises:
- by a processing circuitry of a computer system, obtaining as measured by one or more sensors of the vehicle, a drivable surface condition of the drivable surface, the drivable surface condition being indicative of a wetness condition and/or a temperature condition of the drivable surface,
- by the processing circuitry, based on the drivable surface condition, determining a travel plan of how one or more wheels of the vehicle shall travel over the drivable surface to fulfil an energy efficiency condition, and
- by the processing circuitry, issuing a steering instruction to a steering arrangement of the vehicle, wherein the steering instruction indicates to apply a turning force to the steering arrangement of the vehicle based on the determined travel plan.

Optionally in some examples, including in at least one preferred example, the energy efficiency condition comprises at least one of:
- reducing a rolling resistance of the one or more wheels,
- reducing energy consumption of the vehicle,
- increasing temperature of one or more tires of the one or more wheels,
- maintaining a rolling resistance of the one or more wheels,
- maintaining an energy consumption of the vehicle,
- maintaining temperature of one or more tires of the one or more wheels,
- mitigating or limiting an increase of a rolling resistance of the one or more wheels,
- mitigating or limiting an increase in energy consumption of the vehicle, or
- mitigating or limiting a reduction of temperature of one or more tires of the one or more wheels.

Optionally in some examples, including in at least one preferred example, determining the travel plan to fulfill the energy efficiency condition comprises accounting for characteristics of the vehicle.

Optionally in some examples, including in at least one preferred example, the method comprises, by the processing circuitry, obtaining, as measured by the one or more sensors of the vehicle, an indication of one or more tracks of the drivable surface. In these examples, determining the travel plan comprises determining whether or not the one or more wheels the vehicle shall travel in the one or more tracks.

Optionally in some examples, including in at least one preferred example, the vehicle is a vehicle combination comprising at least one towed unit. In some of these examples, determining the travel plan comprises determining whether or not one or more wheels of the at least one towed unit shall travel in the one or more tracks of the drivable surface.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is a vehicle to an example.
**FIG. 2** is an example of travelling with respect to tracks.
**FIG. 3** is a flow chart of an exemplary method according to an example.
**FIG. 4** is an example scenario.
**FIG. 5** is another view of **FIG. 1****,** according to an example.
**FIG. 6** is a flow chart of an exemplary method according to an example.
**FIG. 7** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

Examples herein may relate to improving vehicle operations by ensuring that wheels of a vehicle is travelling on as dry and/or warm part of a driving surface as possible. This may relate to steering away from one or more tracks formed on a road but may under some circumstance also relate to steering towards the one or more tracks. Steering away may avoid tires of the vehicle cooling down when water is formed in the one or more tracks which thereby improves or at least maintains fuel and/or energy efficiency. Furthermore, this allows road wear to be improved as less tracks will be formed and the road wear will be evened out. However, since the one or more tracks are well-travelled, the one or more tracks 10 may be warm which dries any wetness. Furthermore, when multiple vehicles travels with their respective wheels in the one or more tracks, they may also push the water out from the one or more tracks. Hence, for light rain or general light wetness conditions of a driving surface, it may be beneficial to travel in the one or more tracks, and otherwise it may be beneficial to travel outside the one or more tracks, or on edges of the one or more tracks.

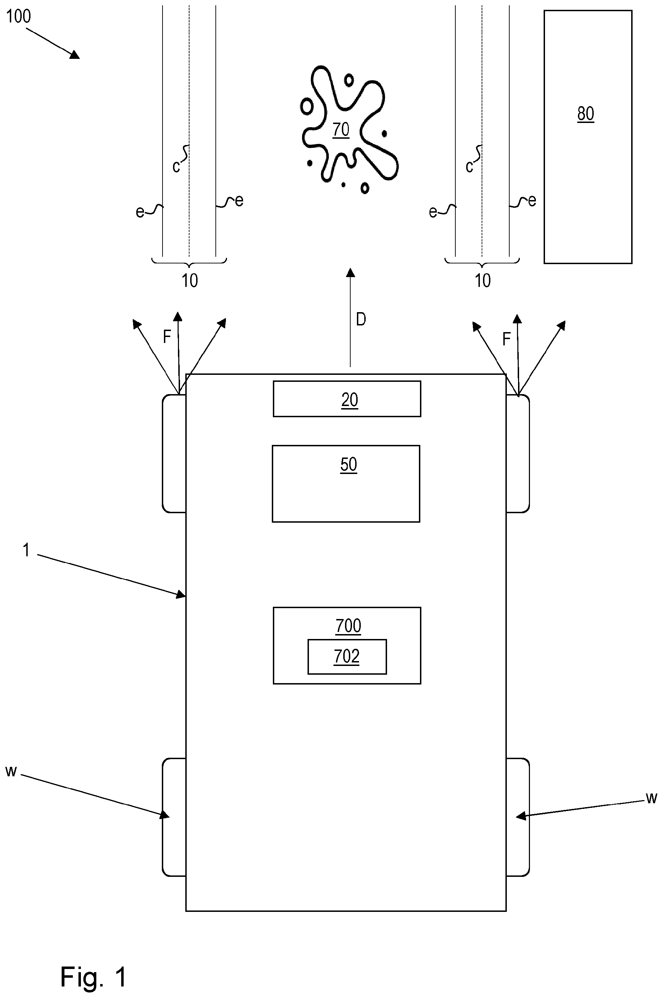

**FIG. 1** illustrates an exemplary **vehicle 1** according to an example.

The vehicle 1 may be any suitable vehicle, e.g., any one out of a car, a vehicle combination, a truck, a bus, and a heavy-duty vehicle. The vehicle may comprise at least one towed unit, such as a trailer.

The vehicle 1 may be arranged to be manually controlled, e.g., remotely or by a user in the vehicle 1, or the vehicle 1 may be at least partly autonomous, e.g., using an automated driving system (ADS) for controlling steering of the vehicle 1.

The vehicle 1 may comprises a number of **wheels w,** each comprising a tire.

The vehicle 1 travels on a **driving surface 100.** The driving surface 100 may typically be a road but may also be any other surface where vehicles may travel such as confined areas, warehouses, etc.

The driving surface 100 may comprise **one or more tracks 10.** Due to excessive wear by vehicles travelling in the same area of the driving surface 100, the one or more tracks 10 have been formed on the driving surface 100. The one or more tracks 10 may be wheel tracks, ruts, or any other groove caused by wear of the driving surface 100. In the one or more tracks 10, water or other liquids may gather after rain or spill such that when the wheels w of the vehicle 1 travel in the one or more tracks 10, the tires of the wheels w may cool down, thereby causing increased fuel and/or energy consumption of the vehicle 1. However, for situations where the one or more tracks 10 hold a small amount of water, e.g., less than a threshold, the traffic of the one or more tracks 10 may cause the water to evaporate due to warmth or cause the water to be pushed away from the one or more tracks 10. Hence, in some light rain or other scenarios where the driving surface 100 only holds a little water, e.g., less than a threshold, the one or more tracks 10 may be drier than other parts of the driving surface 100, and in some other scenarios, the one or more tracks 10 may be wetter than the other parts of the driving surface.

The one or more tracks 10 may extend in a longitudinal direction of the driving surface 100, i.e. the one or more tracks 10 may extend along the driving surface 100 and may not extend laterally across the driving surface 100, at least when the driving surface 100 is a road.

The one or more tracks 10 may comprise a respective center c and may comprise respective edges e. The center c of the respective track may in some examples be associated with the highest / deepest depth of the respective track. The respective edges e may be where a depth of the driving surface 100 is below a threshold. In other words, the edges e may be the first place of the respective track where a change in depth can be detected with respect to the rest of the driving surface 100. The respective edges e may further be defined by how the one or more sensors 20 measures and detects the one or more tracks 10, e.g., wherein the respective edges e may define a width of the detected respective tracks.

The one or more tracks 10 may comprise a respective depth due to excessive driving surface wear. The depth may be measured as a distance below an average surface area of the driving surface 100.

The vehicle 1 may comprise **one or more sensors 20** arranged for measuring the one or more tracks 10 and/or drivable surface conditions of the driving surface such as temperature condition and/or wetness condition. Measuring the wetness condition may relate to measuring water levels or wetness on the driving surface 100. Additionally or alternatively, measuring the wetness condition may comprise measuring rain or snow activity of the environment of the driving surface 100.

The one or more sensors 20 may comprise one or more cameras or one or more other sensors which measures the one or more tracks 10 and/or the drivable surface conditions, e.g., any of: an infrared camera, a laser sensor, a Lidar, a rain wiper sensor etc. As suggested by the use of a rain wiper sensor, the one or more sensors 20 may comprise any one or more suitable indirect sensors which may respectively measure any suitable aspect which may make it possible to induce that it is raining or that the driving surface 100 is wet, e.g., by a rain wiper sensor detecting drops on windshield, or by a wheel sensor indicating slippery surface such as ice, etc.

The one or more sensors 20 may comprise any suitable camera already used by the vehicle for any other purpose as long as it is directed, or can be directed, towards the driving surface 100.

The vehicle 1 comprises a steering arrangement 50. The steering arrangement 50 may comprise any suitable steering equipment, e.g., steering wheel and/or automated steering systems. That the steering arrangement 50 may be capable of being issued steering instructions which can apply a **turning force F** to the vehicle 1, e.g., for nudging the vehicle 1 into steering away from or towards the one or more tracks 10. Nudging as used herein means applying a small force, non-zero but less than a set threshold.

The turning force F may relate to a steering torque that can be applied to a steering wheel of the vehicle 1 but without affecting the steering of the vehicle 1, or a steering torque which affects the steering of the vehicle with a predefined turning angle, such as a minimal turning angle with respect to steering capabilities of the steering arrangement 50. The turning force may be possible to turn off, and/or a user may be able to tune the turning force, e.g., by input to an interface such as controlling whether the force should be higher or lower.

The turning force may be applied in addition to other steering forces by the vehicle 1 and/or the steering arrangement 50 and may be applied to the vehicle 1 as a whole, the wheels w, to an automated steering system of the vehicle 1, to a steering wheel of the vehicle 1, or a combination thereof, such that there is at least a small force imposed on the vehicle 1 for assisting the steering of the vehicle 1 away from the one or more tracks 10.

The turning force F may also be applied directly to wheels of a steering axle of the vehicle 1.

The vehicle 1 may travel in a **travel direction D**. Examples herein may try to ensure that the travel direction D is at least influenced such that the vehicle 1 is steered to fulfil an energy efficiency condition, e.g., to improve or maintain rolling resistance of one or more wheels w of the vehicle 1 and thereby improving energy-efficiency of the vehicle 1 which may be achieved by having one or more of the wheels w to travel in warm and/dry locations of the driving surface 100 such that they are not cooled down. In some examples, steering of the vehicle 1 may involve having the vehicle 1 steer away from or towards the one or more tracks 10. As discussed above this may depend on different circumstances whether or not travelling in the one or more tracks 10 is more energy-efficient or not, primarily depending on drivable surface conditions such as temperature or wetness of the driving surface 100.

Various examples herein relate to determining or assessing dryness and/or warmth of the one or more tracks 10 with respect to remaining parts of the driving surface 100 and on a basis thereof determining a travel plan involving whether or not to travel in the one or more tracks 10 with wheels w of the vehicle 1 or not for improving rolling resistance and energy-efficiency. However, examples herein may further more generally relate to travelling on warm or dry locations of the driving surface 100, such as by using the one or more sensors 20 to obtain a measurement of a **water puddle 70** and/or a **warm location 80** of the driving surface 100, and on a basis thereof determining a travel plan for the vehicle 1 to involve one or more wheels w of the vehicle 1 to avoid travelling in the water puddle 70 and/or where possible, travel in the warm location 80.

Examples herein may be performed by a computer system 700 and/or a processing circuitry 702 therein.

The computer system 700 and/or the processing circuitry 702 therein may be comprised in the vehicle 1 and/or remote to the vehicle 1 such as part of a server or cloud service.

In some examples, the computer system 700 and/or the processing circuitry 702 may be or may comprises an Electronic Control Unit (ECU) for controlling the vehicle 1.

In some examples, the computer system 700 and/or the processing circuitry 702 therein may be communicatively coupled with, and/or capable of controlling any suitable entity of the vehicle 1. For example, the computer system 700 and/or the processing circuitry 602 may be able to obtain information about the one or more tracks 10 and/or sensor data to be used for establishing the one or more tracks 10, such as received from the one or more sensors 20. The computer system 700 and/or the processing circuitry 602 may be able to use the one or more sensors 20 to measure or otherwise obtain drivable surface conditions of the driving surface such as temperature condition and/or wetness condition. As another example, the computer system 700 and/or the processing circuitry 702 may be able to control the steering arrangement 50, e.g., by issuing steering instructions to said steering arrangement 50.

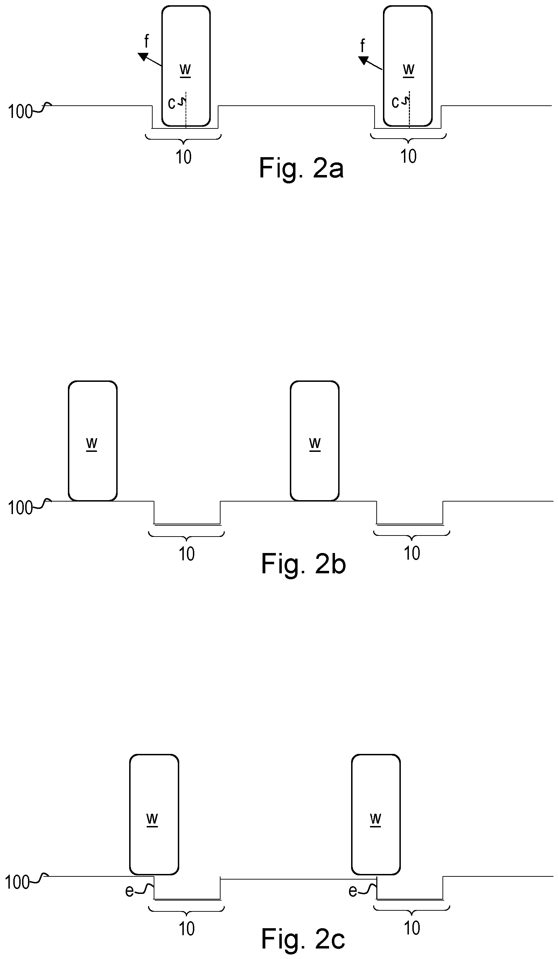

**FIGS. 2a****-c** are examples of travelling with respect to the one or more tracks 10.

In examples herein, in particular with regards to FIGS. 2a-c, the vehicle 1 may be configured to actively avoid travelling in the one or more track 10, unless the one or more tracks 10 are determined or assessed to be drier and/or warmer than the remaining parts of the driving surface 100.

In the example scenario of FIG. 2a, the wheels w of the vehicle 1 is travelling on the driving surface 100 such that at least two wheels w of the vehicle 1 are travelling within the one or more tracks 10 aligned with the center c of the respective tracks. This manner of travelling the driving surface 100 may be seen as a typical manner of travelling the driving surface 100 since the one or more tracks 10 have been formed around the respective center c and a vehicle naturally may align with the respective tracks unless explicitly steered away.

In examples herein, a travel plan is determined and if such a travel plan indicates that it is more energy efficient to travel outside the one or more tracks 10, a turning force may be applied to the vehicle 1, to turn the vehicle 1, e.g., based on the position of the vehicle 1 with respect to the one or more tracks 10 on the driving surface 100, such that the vehicle 1 steers away from the one or more tracks 10. In FIG. 2a, the turning force may be indicated as a force f on the wheels w, away from the center of the respective one or more tracks 10. In some examples herein, an opposite corresponding force for turning towards the one or more tracks 10 may also be possible, e.g., if a travel plan is determined that it is more efficient for the vehicle 1 to travel with at least one or more of its wheels w in the one or more tracks 10, for example when the one or more tracks 10 are assessed to be drier and/or warmer than remaining parts of the driving surface 100.

In the example scenario of **FIG. 2b****,** the wheels w of the vehicle 1 is travelling on the driving surface 100 such that at least two wheels w have been steered away from the one or more tracks 10, thereby the wheels w have less risk of being wet and subsequently cooled down when the one or more tracks 10 are water-filled. Furthermore, road wear is evened out over the drivable surface 100 since the one or more tracks 10 are not travelled by the vehicle 1.

In the example scenario of **FIG. 2c****,** the wheels w of the vehicle 1 is travelling on the driving surface 100 such that at least two wheels w are traveling on respective edges e of the one or more tracks 10. In this way, the wheels w have less risk of being wet and subsequently cooled down when the one or more tracks 10 are water-filled. Furthermore, wear is evened out over the drivable surface 100 since travelling on the edges e will cause the one or more tracks 10 to even out as the wear will occur on the edges e, thereby widening the one or more tracks 10 until they are evened out completely, or at least not detectable by the one or more sensors 20.

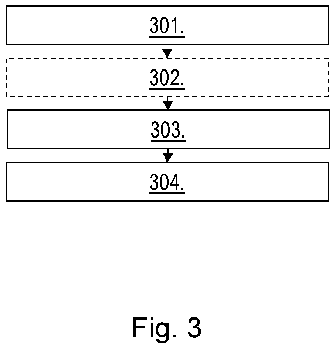

**FIG. 3** is a flow chart of a computer-implemented method for assisting in steering the vehicle 1 travelling on a drivable surface 100. The method comprises the following actions which can be performed in any suitable order. The method may be performed by the computer system 700 and/or the processing circuitry 702 therein. Dashed boxes in FIG. 3 may indicate optional actions.

### Action 301

The method comprises obtaining a drivable surface condition of the drivable surface 100. The drivable surface condition is measured by the one or more sensors 20 of the vehicle 1, e.g., often using laser(s) and/or infrared cameras. Measuring the drivable surface condition may comprise measuring using any suitable camera as part of the one or more sensors 20, such as using a dash-cam already provided with the vehicle.

The drivable surface condition is indicative of a wetness condition and/or a temperature condition of the drivable surface 100.

The wetness condition may indicate where the driving surface 100 is wet and/or water levels of the driving surface 100. Additionally or alternatively, the wetness condition may indicate if it is raining or snowing on the driving surface 100. The wetness condition may further indicate how much it is raining or snowing, e.g., at what rate and/or amount.

In some examples, the temperature condition comprises a heat distribution of the drivable surface 100, e.g., as measured by an infrared camera or other temperature sensor of the one or more sensors 20.

In some examples the wetness condition comprises a difference in wetness over one or more locations of the drivable surface 100, e.g., as obtained by using a camera or laser of the one or more sensors 20 to measure wetness of the driving surface 100. In some examples, the wetness condition may further be based on how the wetness is estimated to spread of the driving surface, e.g., during rain, such as with respect to the one or more tracks 10.

The spread of the wetness and/or how the wetness may remain or evaporate may further be assessed based on a predefined wetness model and/or predefined heuristics. For example, wetness in the one or more tracks 10 and/or wherein it is otherwise indicated to be warm may evaporate the wetness faster.

In some examples the wetness condition indicates any one or more out of ice, mud, water, or liquids on the drivable surface 100.

### Action 302

The method may in some examples comprise obtaining an indication of one or more tracks 10 of the drivable surface 100.

The one or more tracks 10 is measured by the one or more sensors 20 of the vehicle 1.

An indication as used herein may be any type of manner of communication of the one or more tracks 10.

Action 302 and 301 may also be combined such that wetness and/or heat of the one or more tracks 10 may be obtained and used as a basis for any suitable aspects of examples herein.

### Action 303

The method comprises by the processing circuitry 702, based on the drivable surface condition, determining a travel plan of how one or more wheels w of the vehicle 1 shall travel over the drivable surface 100 to fulfil an energy efficiency condition.

The energy efficiency condition may relate to any suitable energy efficiency condition, i.e., for improving energy efficiency of the vehicle 1 such as at least one of:
- reducing a rolling resistance of the one or more wheels w,
- reducing energy consumption of the vehicle 1,
- increasing temperature of one or more tires of the one or more wheels w,
- maintaining a rolling resistance of the one or more wheels w,
- maintaining an energy consumption of the vehicle 1,
- maintaining temperature of one or more tires of the one or more wheels w,
- mitigating or limiting an increase of a rolling resistance of the one or more wheels w,
- mitigating or limiting an increase in energy consumption of the vehicle 1, or
- mitigating or limiting a reduction of temperature of one or more tires of the one or more wheels w.

The energy efficiency condition may be to reduce energy used by the vehicle 1, in particular by reducing rolling resistance of wheels w of the vehicle 1 by keeping the tires warm. The rolling resistance of the wheels w may be lowest for different temperatures ranges of tires such as in the interval of 80-90C which may be attained by travelling on surface areas which are warm and dry.

In some examples, determining the travel plan comprises determining whether or not the one or more wheels w the vehicle 1 shall travel in the one or more tracks 10. In particular, when the one or more tracks 10 can be determined or assessed to be drier and warmer than remaining parts of the drivable surface 100, the travel plan may be determined such that the one or more wheels w of the vehicle 1 shall travel in the one or more tracks 10. In such examples, the one or more wheels w may relate to all or some wheels of the vehicle 1, e.g., the wheels which are more important for energy efficiency and/or the wheels which are possible to steer accordingly.

In some examples, an example, when the wetness condition indicates that the drivable surface is wet, determining the travel plan may comprise, based on the wetness condition, assessing whether or not the one or more tracks 10 are wetter or drier than the remaining drivable parts of the drivable surface 100. The assessment may be performed based on direct measurement and/or based on the predefined wetness model, e.g., for how fast the one or more tracks 10 may dry such as with respect to the temperature condition and/or based on predefined heuristics for how the wetness dry over different temperatures and/or over the one or more tracks 10. Determining the travel plan may further comprise determining that the one or more wheels w of the vehicle 1 shall travel in the one or more tracks 10 when the one or more tracks 10 are assessed to be drier than the remaining parts of the drivable surface 100.

In some examples determining the travel plan based on the wetness condition relates to that it may be established that the driving surface 100 is wet, and it may be measured that the one or more tracks 10 are drier than remaining parts, or it may be established by predetermined models indicating that light rain or other light wetness conditions will result in that the one or more tracks 10 are still warm and/or vehicles drive there so often that the one or more tracks 10 are more likely to be drier than other parts of the driving surface 100.

In some examples, determining the travel plan to fulfill the energy efficiency condition comprises accounting for characteristics of the vehicle 1. In particular, when the vehicle 1 comprises a towed unit such as a trailer, the wheels of the towed unit may have a higher load than a towing unit of the vehicle, which means that the rolling resistance of tires of the towed unit may be of highest importance for improving energy efficiency of the vehicle 1. As an example, when the vehicle 1 is a vehicle combination comprising at least one towed unit, determining the travel plan may comprise determining whether or not one or more wheels of the at least one towed unit shall travel in the one or more tracks 10 of the drivable surface 100.

In some examples, if tires of the wheels w are too warm, the travel plan may further be determined to travel on cooler or wetter locations to attain the best rolling resistance. However, for such examples, a temperature model or temperature measurement of tires of the wheels w of the vehicle 1 may be used as a basis for determining the travel plan. Most commonly, the tires of the vehicle 1 are not sufficiently warm, and hence, examples herein may attain energy efficiency simply by determining the travel plan such that one or more wheels w of the vehicle 1 travel in warm and/or dry locations of the drivable surface 100.

In some examples when the wetness condition comprises a difference in wetness over one or more locations of the drivable surface 100, determining the travel plan may comprise determining that the one or more wheels w of the vehicle 1 shall, according to the difference in wetness of the drivable surface 100, travel in one or more third locations associated with a drier surface area than a surface of one or more fourth locations of the drivable surface 100, in some examples the one or more third locations are associated with the driest surface area of the drivable surface 100.

The travel plan may be determined to accommodate for a position of the vehicle 1 within the driving surface 1, e.g., relative to the one or more tracks 10.

In some examples when the temperature condition comprises the heat distribution, determining the travel plan may comprise determining that the one or more wheels w of the vehicle 1 shall, according to the heat distribution, travel in one or more first locations associated with a temperature warmer than a temperature of one or more second locations of the drivable surface 100. In particular, the one or more first locations may be associated with the warmest temperature of the drivable surface 100 according to the heat distribution.

In some examples when the vehicle 1 is configured to actively avoid travelling in the one or more tracks 10, and/or to travel on edges e of the one or more tracks 10, determining the travel plan may comprise that when the drivable surface condition indicates that traveling in the one or more tracks 10 improves energy-efficiency of operating the vehicle 1, override and/or cancel the active instruction to avoid travelling in the one or more tracks 10 and/or to travel on the edges e of the one or more tracks 10.

### Action 304

The method comprises issuing a steering instruction to a steering arrangement 50 of the vehicle 1. The steering instruction indicates to apply a turning force to the steering arrangement of the vehicle 1 based on the determined travel plan.

The turning force may be non-zero, in any suitable direction, but may be below a set threshold. The turning force may apply in a similar manner to how forces are applied for use in lane keeping for vehicles. The steering of the vehicle 1 is nudged towards a location of the driving surface 100, e.g., where the tires will travel on warm and/or dry surface area. The turning force may be configurable based on the surface conditions of the drivable surface 100, a motion of the vehicle 1, and/or based on heuristics and/or a predefined model such as with respect to how the drivable surface 100 keeps dry or will dry due to traffic or based on the temperature condition..

In some examples, applying the turning force comprises applying a corresponding force to a steering wheel of the vehicle 1. In other words, a user of the vehicle 1 may be able to feel the turning force applied to the steering wheel, acting similar to a lane assist system which is intended to nudge the vehicle 1 according to the travel plan, e.g., to steer towards dry and warm areas, e.g., to steer away from or towards the one or more tracks 10 depending on the drivable surface conditions. It should be noted that the user may always be in full control of the steering and can, if s/he so pleases, steer in any suitable direction..

In some examples, applying the turning force comprises adjusting a turning force of an automated steering system to account for the turning force. In other words, the automated steering system may have a set steering for the vehicle 1, and the turning force will be accounted for such that the steering of the vehicle 1 can behave as normal but with the addition of turning according to the travel plan. For example, the turning force may be a set parameter added to a steering parameter of the automated steering system, e.g., according to a predefined steering model. The automated steering system may be the automated steering system of the steering arrangement 50.

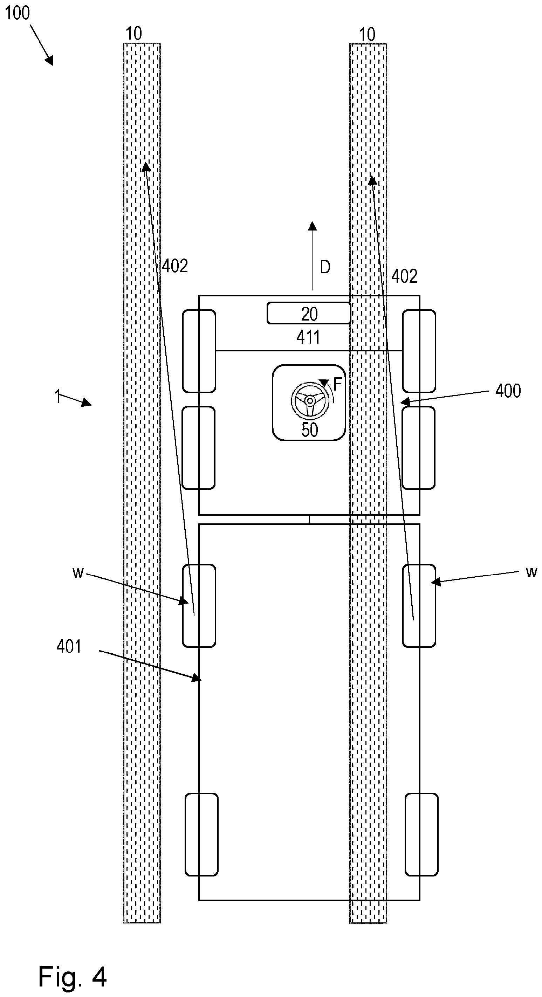

**FIG. 4** is an example scenario where the vehicle 1 comprises a towing unit 401 and a towed unit 400.

In this example, the steering arrangement 50 is a steering wheel controlling steering of a steered axle 411.

In this scenario, the examples above, when referring to the one or more wheels w of the vehicle 1, wheels of the towed unit 401 are included. This is since the towed unit 401 may be heavier and apply higher load on the wheels, and hence, rolling resistance from corresponding tires is more important for energy efficiency.

In this example scenario the vehicle 1 is travelling in a driving direction D. The vehicle 1 may be avoiding the one or more tracks 10 such as to reduce wear on the driving surface 100.

However, the one or more sensors 20 detect that it is staring raining and consequently that the driving surface 100 is associated with a light rain as part of measuring the wetness condition of the driving surface 100. The wetness condition may relate to that it is raining less than a predefined volume of water per time period, and/or that the rain has only occurred for less than a set time period. In such a scenario, the travel plan, e.g., as part of action 303, is determined that it is more energy efficient to travel in the one or more tracks 10, thereby fulfilling the energy efficiency condition of reducing rolling resistance of the one or more wheels w. This is since when the wetness of the road is low, the one or more tracks 10 tend to be drier and warmer due to frequent traffic in these areas of the driving surface 100.

Accordingly, the steering instruction, e.g., as part of action 304 may relate to applying a torque to the steering wheel of the steering arrangement 50 such that a user of the vehicle 1 feels that there is a force to steer the one or more wheels w towards the one or more tracks 10.

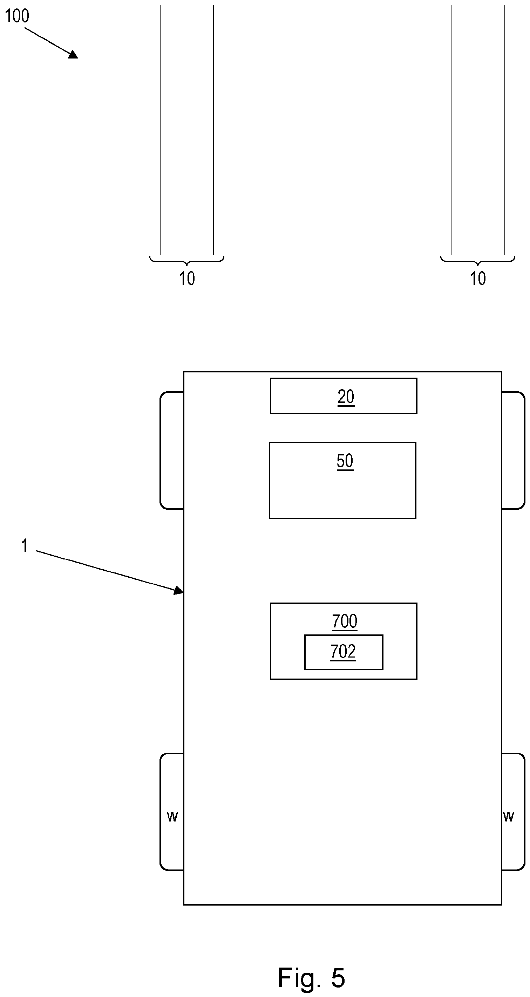

**FIG. 5** is another view of **FIG. 1****,** according to an example.

The computer system 700 comprising the processing circuitry 702 configured to assist in steering the vehicle 1 travelling on the drivable surface 100 is provided.

The processing circuitry 702 is configured to obtain as measured by one or more sensors 20 of the vehicle 1, a drivable surface condition of the drivable surface 100. The drivable surface condition is indicative of a wetness condition and/or a temperature condition of the drivable surface 100.

The processing circuitry 702 is configured to, based on the drivable surface condition, determine a travel plan of how one or more wheels w of the vehicle 1 shall travel over the drivable surface 100 to fulfil an energy efficiency condition.

The processing circuitry 702 is configured to issue a steering instruction to a steering arrangement 50 of the vehicle 1.

The steering instruction indicates to apply a turning force to the steering arrangement 50 of the vehicle 1 based on the determined travel plan.

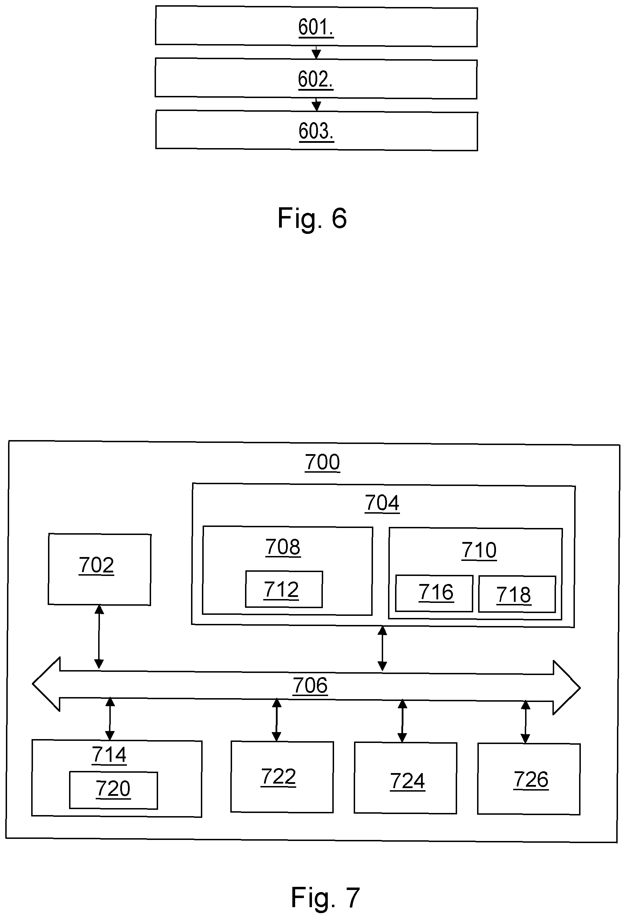

**FIG. 6** is a flow chart of an exemplary computer-implemented method for assisting in steering the vehicle 1 travelling on the drivable surface 100 is provided. The method may be combined with any of the examples herein, in particular with any of the one or more actions 301-304 above. The method comprises the following actions 601-603.

### Action 601

The method comprises, by the processing circuitry 702 of the computer system 700, obtaining, as measured by the one or more sensors 20 of the vehicle 1, a drivable surface condition of the drivable surface 100, the drivable surface condition being indicative of a wetness condition and/or a temperature condition of the drivable surface 100.

### Action 602

The method comprises, by the processing circuitry 702, based on the drivable surface condition, determining a travel plan of how one or more wheels w of the vehicle 1 shall travel over the drivable surface 100 to fulfil an energy efficiency condition.

### Action 603

The method comprises, by the processing circuitry 702, issuing a steering instruction to a steering arrangement 50 of the vehicle 1. The steering instruction indicates to apply a turning force to the steering arrangement of the vehicle 1 based on the determined travel plan.

**FIG. 7** is a schematic diagram of a computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include processing circuitry **702** (e.g., processing circuitry including one or more processor devices or control units), a memory **704,** and a system bus **706.** The computer system **700** may include at least one computing device having the processing circuitry **702.** The system bus **706** provides an interface for system components including, but not limited to, the memory **704** and the processing circuitry **702.** The processing circuitry **702** may include any number of hardware components for conducting data or signal processing or for executing computer code stored in memory **704.** The processing circuitry **702** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702** may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., randomaccess memory (RAM)), or any other medium which can be used to carry or store desired program code in the form of machine-executable instructions or data structures and which can be accessed by a computer or other machine with processing circuitry **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714,** which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702.** In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702.** The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device
interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Below follows a number of Examples 1-20 which may be combined with any one or more of the above examples, or with the subject matter of the attached claims, in any suitable manner.

Example 1. A computer system (700) comprising processing circuitry (702) configured to assist in steering a vehicle (1) travelling on a drivable surface (100), the processing circuitry (702) further being configured to:
- obtain as measured by one or more sensors (20) of the vehicle (1), a drivable surface condition of the drivable surface (100), the drivable surface condition being indicative of a wetness condition and/or a temperature condition of the drivable surface (100),
- based on the drivable surface condition, determine a travel plan of how one or more wheels (w) of the vehicle (1) shall travel over the drivable surface (100) to fulfil an energy efficiency condition, and
- issue a steering instruction to a steering arrangement (50) of the vehicle (1), wherein the steering instruction indicates to apply a turning force to the steering arrangement of the vehicle (1) based on the determined travel plan.

Example 2. The computer system (700) of Example 1 wherein the energy efficiency condition comprises at least one of:
- reducing a rolling resistance of the one or more wheels (w),
- reducing energy consumption of the vehicle (1),
- increasing temperature of one or more tires of the one or more wheels (w),
- maintaining a rolling resistance of the one or more wheels (w),
- maintaining an energy consumption of the vehicle (1),
- maintaining temperature of one or more tires of the one or more wheels (w),
- mitigating or limiting an increase of a rolling resistance of the one or more wheels (w),
- mitigating or limiting an increase in energy consumption of the vehicle (1), or
- mitigating or limiting a reduction of temperature of one or more tires of the one or more wheels (w).

Example 3. The computer system (700) of any of Examples 1-2 wherein the processing circuitry (702) is configured to determine the travel plan to fulfill the energy efficiency condition by accounting for characteristics of the vehicle (1).

Example 4. The computer system (700) of any of Examples 1-3 wherein the processing circuitry (702) is further configured to obtain, as measured by the one or more sensors (20) of the vehicle (1), an indication of one or more tracks (10) of the drivable surface (100), and wherein the processing circuitry (702) is configured to determine the travel plan by determining whether or not the one or more wheels (w) the vehicle (1) shall travel in the one or more tracks (10).

Example 5. The computer system (700) of Example 4 wherein the vehicle (1) is a vehicle combination comprising at least one towed unit (401), and wherein the processing circuitry (702) is configured to determine the travel plan by determining whether or not one or more wheels of the at least one towed unit (401) shall travel in the one or more tracks (10) of the drivable surface (100).

Example 6. The computer system (700) of any of Examples 4-5 wherein when the wetness condition indicates that the drivable surface (100) is wet, the processing circuitry (702) is further configured to:
- based on the wetness condition, assess whether or not the one or more tracks (10) are wetter or drier than the remaining drivable parts of the drivable surface (100), and
- determine the travel plan by determining that the one or more wheels (w) of the vehicle (1) shall travel in the one or more tracks (10) when the one or more tracks (10) are assessed to be drier than the remaining parts of the drivable surface (100).

Example 7. The computer system (700) of any of Examples 1-6 wherein the temperature condition comprises a heat distribution of the drivable surface (100), and wherein the processing circuitry (702) is configured to determine the travel plan by determining that the one or more wheels (w) of the vehicle (1) shall, according to the heat distribution, travel in one or more first locations associated with a temperature warmer than a temperature of one or more second locations of the drivable surface (100).

Example 8. The computer system (700) of Example 7 wherein the one or more first locations are associated with the warmest temperature of the drivable surface (100) according to the heat distribution.

Example 9. The computer system (700) of any of Examples 1-8 wherein the wetness condition comprises a difference in wetness over one or more locations of the drivable surface (100), and wherein the processing circuitry (702) is configured to determine the travel plan by determining that the one or more wheels (w) of the vehicle (1) shall, according to the difference in wetness of the drivable surface (100), travel in one or more third locations associated with a drier surface area than a surface of one or more fourth locations of the drivable surface (100).

Example 10. The computer system (700) of Example 9 wherein the one or more third locations are associated with the driest surface area of the drivable surface (100).

Example 11. The computer system (700) of any of Examples 1-10 wherein when the vehicle (1) is configured to actively avoid travelling in the one or more tracks (10), and/or to travel on edges (e) of the one or more tracks (10), the processing circuitry (702) is configured to determine the travel plan by, when the drivable surface condition indicates that traveling in the one or more tracks (10) improves energy-efficiency of operating the vehicle (1), override and/or cancel the active instruction to avoid travelling in the one or more tracks (10) and/or to travel on the edges (e) of the one or more tracks (10).

Example 12. A vehicle comprising and/or being controlled by a computer system (700) according to any of Examples 1-11.

Example 13. The vehicle according to Example 12, wherein the vehicle is a vehicle combination comprising at least one towed unit.

Example 14. A computer-implemented method for assisting in steering a vehicle (1) travelling on a drivable surface (100), the method comprising:
- By a processing circuitry (702) of a computer system (700), obtaining (301, 601) as measured by one or more sensors (20) of the vehicle (1), a drivable surface condition of the drivable surface (100), the drivable surface condition being indicative of a wetness condition and/or a temperature condition of the drivable surface (100),
- by the processing circuitry (702), based on the drivable surface condition, determining (303, 602) a travel plan of how one or more wheels (w) of the vehicle (1) shall travel over the drivable surface (100) to fulfil an energy efficiency condition, and
- by the processing circuitry (702), issuing (304, 603) a steering instruction to a steering arrangement (50) of the vehicle (1), wherein the steering instruction indicates to apply a turning force to the steering arrangement of the vehicle (1) based on the determined travel plan.

Example 15. The method of Example 14 wherein the energy efficiency condition comprises at least one of:
- reducing a rolling resistance of the one or more wheels (w),
- reducing energy consumption of the vehicle (1),
- increasing temperature of one or more tires of the one or more wheels (w),
- maintaining a rolling resistance of the one or more wheels (w),
- maintaining an energy consumption of the vehicle (1),
- maintaining temperature of one or more tires of the one or more wheels (w),
- mitigating or limiting an increase of a rolling resistance of the one or more wheels (w),
- mitigating or limiting an increase in energy consumption of the vehicle (1), or
- mitigating or limiting a reduction of temperature of one or more tires of the one or more wheels (w).

Example 16. The method of any of Examples 14-15 wherein determining (303) the travel plan to fulfill the energy efficiency condition comprises accounting for characteristics of the vehicle (1).

Example 17. The method of any of Examples 14-16 wherein the method comprises, by the processing circuitry (702), obtaining (302), as measured by the one or more sensors (20) of the vehicle (1), an indication of one or more tracks (10) of the drivable surface (100), and wherein determining (303) the travel plan comprises determining whether or not the one or more wheels (w) the vehicle (1) shall travel in the one or more tracks (10).

Example 18. The method of Example 17 wherein the vehicle (1) is a vehicle combination comprising at least one towed unit (401), and wherein determining (303) the travel plan comprises determining whether or not one or more wheels of the at least one towed unit (401) shall travel in the one or more tracks (10) of the drivable surface (100).

Example 19. A computer program product comprising program code for performing, when executed by the processing circuitry (702), the method of any of Examples 14-19.

Example 20. A non-transitory computer-readable storage medium comprising instructions, which when executed by the processing circuitry (702), cause the processing circuitry (702) to perform the method of any of Examples 14-19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (700) comprising processing circuitry (702) configured to assist in steering a vehicle (1) travelling on a drivable surface (100), the processing circuitry (702) further being configured to:
- obtain as measured by one or more sensors (20) of the vehicle (1), a drivable surface condition of the drivable surface (100), the drivable surface condition being indicative of a wetness condition and/or a temperature condition of the drivable surface (100),
- based on the drivable surface condition, determine a travel plan of how one or more wheels (w) of the vehicle (1) shall travel over the drivable surface (100) to fulfil an energy efficiency condition, and
- issue a steering instruction to a steering arrangement (50) of the vehicle (1),
wherein the steering instruction indicates to apply a turning force to the steering arrangement of the vehicle (1) based on the determined travel plan.

2. The computer system (700) of claim 1 wherein the energy efficiency condition comprises at least one of:
- reducing a rolling resistance of the one or more wheels (w),
- reducing energy consumption of the vehicle (1),
- increasing temperature of one or more tires of the one or more wheels (w),
- maintaining a rolling resistance of the one or more wheels (w),
- maintaining an energy consumption of the vehicle (1),
- maintaining temperature of one or more tires of the one or more wheels (w),
- mitigating or limiting an increase of a rolling resistance of the one or more wheels (w),
- mitigating or limiting an increase in energy consumption of the vehicle (1), or
- mitigating or limiting a reduction of temperature of one or more tires of the one or more wheels (w).

3. The computer system (700) of any of claims 1-2 wherein the processing circuitry (702) is configured to determine the travel plan to fulfill the energy efficiency condition by accounting for characteristics of the vehicle (1).

4. The computer system (700) of any of claims 1-3 wherein the processing circuitry (702) is further configured to obtain, as measured by the one or more sensors (20) of the vehicle (1), an indication of one or more tracks (10) of the drivable surface (100), and wherein the processing circuitry (702) is configured to determine the travel plan by determining whether or not the one or more wheels (w) the vehicle (1) shall travel in the one or more tracks (10).

5. The computer system (700) of claim 4 wherein the vehicle (1) is a vehicle combination comprising at least one towed unit (401), and wherein the processing circuitry (702) is configured to determine the travel plan by determining whether or not one or more wheels of the at least one towed unit (401) shall travel in the one or more tracks (10) of the drivable surface (100).

6. The computer system (700) of any of claims 4-5 wherein when the wetness condition indicates that the drivable surface (100) is wet, the processing circuitry (702) is further configured to:
- based on the wetness condition, assess whether or not the one or more tracks (10) are wetter or drier than the remaining drivable parts of the drivable surface (100), and
- determine the travel plan by determining that the one or more wheels (w) of the vehicle (1) shall travel in the one or more tracks (10) when the one or more tracks (10) are assessed to be drier than the remaining parts of the drivable surface (100).

7. The computer system (700) of any of claims 1-6 wherein the temperature condition comprises a heat distribution of the drivable surface (100), and wherein the processing circuitry (702) is configured to determine the travel plan by determining that the one or more wheels (w) of the vehicle (1) shall, according to the heat distribution, travel in one or more first locations associated with a temperature warmer than a temperature of one or more second locations of the drivable surface (100).

8. The computer system (700) of claim 7 wherein the one or more first locations are associated with the warmest temperature of the drivable surface (100) according to the heat distribution.

9. The computer system (700) of any of claims 1-8 wherein the wetness condition comprises a difference in wetness over one or more locations of the drivable surface (100), and wherein the processing circuitry (702) is configured to determine the travel plan by determining that the one or more wheels (w) of the vehicle (1) shall, according to the difference in wetness of the drivable surface (100), travel in one or more third locations associated with a drier surface area than a surface of one or more fourth locations of the drivable surface (100).

10. The computer system (700) of any of claims 1-9 wherein when the vehicle (1) is configured to actively avoid travelling in the one or more tracks (10), and/or to travel on edges (e) of the one or more tracks (10), the processing circuitry (702) is configured to determine the travel plan by, when the drivable surface condition indicates that traveling in the one or more tracks (10) improves energy-efficiency of operating the vehicle (1), override and/or cancel the active instruction to avoid travelling in the one or more tracks (10) and/or to travel on the edges (e) of the one or more tracks (10).

11. A vehicle comprising and/or being controlled by a computer system (700) according to any of claims 1-10, and optionally wherein the vehicle (1) is a vehicle combination comprising at least one towed unit (401).

12. A computer-implemented method for assisting in steering a vehicle (1) travelling on a drivable surface (100), the method comprising:
- by a processing circuitry (702) of a computer system (700), obtaining (301, 601) as measured by one or more sensors (20) of the vehicle (1), a drivable surface condition of the drivable surface (100), the drivable surface condition being indicative of a wetness condition and/or a temperature condition of the drivable surface (100),
- by the processing circuitry (702), based on the drivable surface condition, determining (303, 602) a travel plan of how one or more wheels (w) of the vehicle (1) shall travel over the drivable surface (100) to fulfil an energy efficiency condition, and
- by the processing circuitry (702), issuing (304, 603) a steering instruction to a steering arrangement (50) of the vehicle (1), wherein the steering instruction indicates to apply a turning force to the steering arrangement of the vehicle (1) based on the determined travel plan.

13. The method of claim 12 wherein the method comprises, by the processing circuitry (702), obtaining (302), as measured by the one or more sensors (20) of the vehicle (1), an indication of one or more tracks (10) of the drivable surface (100), and wherein determining (303) the travel plan comprises determining whether or not the one or more wheels (w) the vehicle (1) shall travel in the one or more tracks (10).

14. A computer program product comprising program code for performing, when executed by the processing circuitry (702), the method of any of claims 12-13.

15. A non-transitory computer-readable storage medium comprising instructions, which when executed by the processing circuitry (702), cause the processing circuitry (702) to perform the method of any of claims 12-13.

## Amended claims

### Amended claims in accordance with Rule 137(2) EPC.

1. A computer system (700) comprising processing circuitry (702) configured to assist in steering a vehicle (1) travelling on a drivable surface (100), the processing circuitry (702) further being configured to:
- obtain as measured by one or more sensors (20) of the vehicle (1), a drivable surface condition of the drivable surface (100), the drivable surface condition being indicative of a wetness condition and a temperature condition of the drivable surface (100),
- based on the drivable surface condition, determine a travel plan of how one or more wheels (w) of the vehicle (1) shall travel over the drivable surface (100) to fulfil an energy efficiency condition, and
issue a steering instruction to a steering arrangement (50) of the vehicle (1), wherein the steering instruction indicates to apply a turning force to the steering arrangement of the vehicle (1) based on the determined travel plan,
wherein the processing circuitry (702) is further configured to obtain, as measured by the one or more sensors (20) of the vehicle (1), an indication of one or more tracks (10) of the drivable surface (100), and wherein the processing circuitry (702) is configured to determine the travel plan by determining whether or not the one or more wheels (w) the vehicle (1) shall travel in the one or more tracks (10) based on the surface condition such that travelling in the one or more tracks (10) is avoided, unless the one or more tracks (10) are determined or assessed to be drier and warmer than the remaining parts of the drivable surface (100).

2. The computer system (700) of claim 1 wherein the energy efficiency condition comprises at least one of:
- reducing a rolling resistance of the one or more wheels (w),
- reducing energy consumption of the vehicle (1),
- increasing temperature of one or more tires of the one or more wheels (w),
- maintaining a rolling resistance of the one or more wheels (w),
- maintaining an energy consumption of the vehicle (1),
- maintaining temperature of one or more tires of the one or more wheels (w),
- mitigating or limiting an increase of a rolling resistance of the one or more wheels (w),
- mitigating or limiting an increase in energy consumption of the vehicle (1), or
- mitigating or limiting a reduction of temperature of one or more tires of the one or more wheels (w).

3. The computer system (700) of any of claims 1-2 wherein the processing circuitry (702) is configured to determine the travel plan to fulfill the energy efficiency condition by accounting for characteristics of the vehicle (1).

4. The computer system (700) of claim 1 wherein the vehicle (1) is a vehicle combination comprising at least one towed unit (401), and wherein the processing circuitry (702) is configured to determine the travel plan by determining whether or not one or more wheels of the at least one towed unit (401) shall travel in the one or more tracks (10) of the drivable surface (100).

5. The computer system (700) of any of claims 1-4 wherein when the wetness condition indicates that the drivable surface (100) is wet, the processing circuitry (702) is further configured to:
- based on the wetness condition, assess whether or not the one or more tracks (10) are wetter or drier than the remaining drivable parts of the drivable surface (100), and
- determine the travel plan by determining that the one or more wheels (w) of the vehicle (1) shall travel in the one or more tracks (10) when the one or more tracks (10) are assessed to be drier than the remaining parts of the drivable surface (100).

6. The computer system (700) of any of claims 1-5 wherein the temperature condition comprises a heat distribution of the drivable surface (100), and wherein the processing circuitry (702) is configured to determine the travel plan by determining that the one or more wheels (w) of the vehicle (1) shall, according to the heat distribution, travel in one or more first locations associated with a temperature warmer than a temperature of one or more second locations of the drivable surface (100).

7. The computer system (700) of claim 6, wherein the one or more first locations are associated with the warmest temperature of the drivable surface (100) according to the heat distribution.

8. The computer system (700) of any of claims 1-7 wherein the wetness condition comprises a difference in wetness over one or more locations of the drivable surface (100), and wherein the processing circuitry (702) is configured to determine the travel plan by determining that the one or more wheels (w) of the vehicle (1) shall, according to the difference in wetness of the drivable surface (100), travel in one or more third locations associated with a drier surface area than a surface of one or more fourth locations of the drivable surface (100).

9. The computer system (700) of any of claims 1-8 wherein when the vehicle (1) is configured to actively avoid travelling in the one or more tracks (10), and/or to travel on edges (e) of the one or more tracks (10), the processing circuitry (702) is configured to determine the travel plan by, when the drivable surface condition indicates that traveling in the one or more tracks (10) improves energy-efficiency of operating the vehicle (1), override and/or cancel the active instruction to avoid travelling in the one or more tracks (10) and/or to travel on the edges (e) of the one or more tracks (10).

10. A vehicle comprising and/or being controlled by a computer system (700) according to any of claims 1-9, and optionally wherein the vehicle (1) is a vehicle combination comprising at least one towed unit (401).

11. A computer-implemented method for assisting in steering a vehicle (1) travelling on a drivable surface (100), the method comprising:
- by a processing circuitry (702) of a computer system (700), obtaining (301, 601) as measured by one or more sensors (20) of the vehicle (1), a drivable surface condition of the drivable surface (100), the drivable surface condition being indicative of a wetness condition and/or a temperature condition of the drivable surface (100),
- by the processing circuitry (702), based on the drivable surface condition, determining (303, 602) a travel plan of how one or more wheels (w) of the vehicle (1) shall travel over the drivable surface (100) to fulfil an energy efficiency condition, and
- by the processing circuitry (702), issuing (304, 603) a steering instruction to a steering arrangement (50) of the vehicle (1), wherein the steering instruction indicates to apply a turning force to the steering arrangement of the vehicle (1) based on the determined travel plan.

12. The method of claim 11 wherein the method comprises, by the processing circuitry (702), obtaining (302), as measured by the one or more sensors (20) of the vehicle (1), an indication of one or more tracks (10) of the drivable surface (100), and wherein determining (303) the travel plan comprises determining whether or not the one or more wheels (w) the vehicle (1) shall travel in the one or more tracks (10).

13. A computer program product comprising program code for performing, when executed by the processing circuitry (702), the method of any of claims 11-12.

14. A non-transitory computer-readable storage medium comprising instructions, which when executed by the processing circuitry (702), cause the processing circuitry (702) to perform the method of any of claims 11-12.
